# EUROPEAN PATENT SPECIFICATION

(11) **EP 1 894 750 B1**
(45) Date of publication and mention of the grant of the patent: **17.02.2010**
(21) Application number: 06766779.0
(22) Date of filing: 15.06.2006
(51) Int. Cl.: B60C 17/01, B60C 5/14

(54) **AIR BLADDER FOR SAFETY TIRE AND SAFETY TIRE USING THE SAME**
LUFTBLASE FÜR SICHERHEITSREIFEN UND DIESE VERWENDENDER SICHERHEITSREIFEN
VESSIE D'AIR POUR PNEU DE SÉCURITÉ ET PNEU DE SÉCURITÉ UTILISANT LA VESSIE D'AIR

(30) Priority: 15.06.2005 JP 2005175154
(43) Date of publication of application: 05.03.2008
(73) Proprietor: Bridgestone Corporation, Tokyo 104-8340 (JP)
(72) Inventor: TANAKA, Yoshitaka, c/o BRIDGESTONE CORPORATION, Kodaira-shi, Tokyo 1878531 (JP)
(74) Representative: Whalley, Kevin
(86) International application number: PCT/JP2006/312045
(87) International publication number: WO 2006/135012

(56) References cited:
- EP-A- 1 398 183
- WO-A-2006/011325
- WO-A-2006/013681
- WO-A1-2006/011325
- WO-A1-2006/013681
- JP-A- 2002 192 923
- JP-A- 2003 146 032
- JP-A- 2004 090 808
- JP-B1- 34 009 351
- JP-B1- 51 022 241

## Description

The present invention relates to an air bladder for a safety tire which has a hollow toric body which is to be accommodated in a tire to form a cavity at least between the air bladder and an inner surface of a tread portion of the tire under the normal internal pressure state of the tire and to radially expand with a decrease in the internal pressure of the tire to take over load support from the tire, and to a safety tire using such an air bladder. Particularly, the present invention aims to prevent the inner surface of the air bladder from being stuck and to improve the air-impermeability of such an air bladder.

As a safety tire which can travel for a certain distance even under the runflat state where the tire internal pressure is suddenly lowered due to a puncture or the like, known is a tire in which a reinforcing member such as a reinforcing tube, a reinforcing rubber and a reinforcing belt is used as a rubbery material and a forming body, an elastic body or a core is accommodated. More recently, a safety tire in which an air bladder having a hollow toric body is accommodated to radially expand with a decrease in the internal pressure of the tire to take over a tire load under the runflat condition where the internal pressure of the tire is decreased due to a puncture or the like has become widely used from the view point of suppressing production cost and weight (see, for example, JP-A-2004-90808).

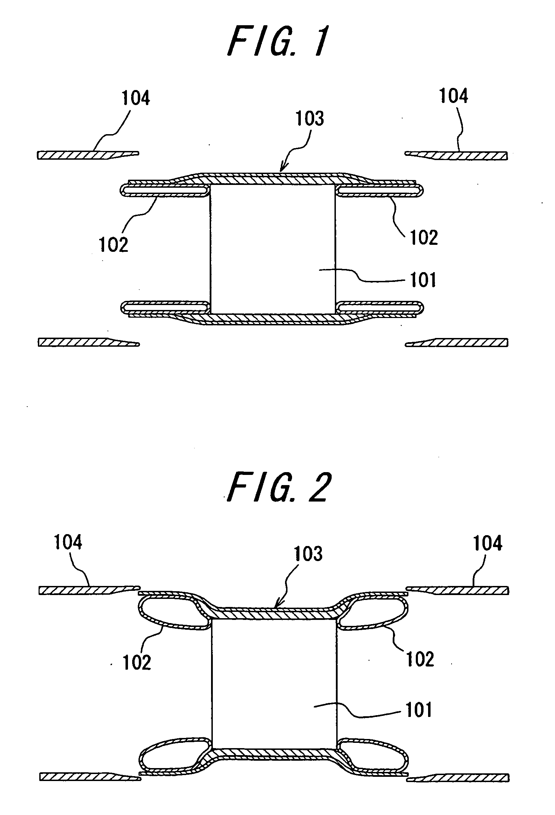

Such an air bladder is typically manufactured in the following sequence. Firstly, as shown in FIG. 1, an air bladder body member 103 in a ring shape is placed on a building drum 101 and bladders 102. The air bladder body member 103 may be preliminarily formed in a ring shape on another building drum or the like, or a sheet-like air bladder component member may be wrapped around the building drum 101 and its circumferential ends are joined with each other to be shaped into a ring. Then, the bladders 102 are inflated, and the width ends of the air bladder body member 103 are lifted outwardly in the radial direction of the drum, as shown in FIG. 2.

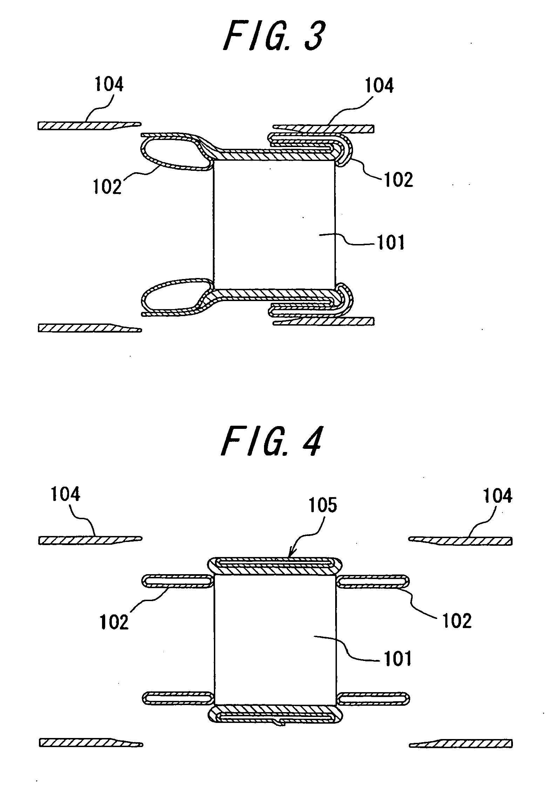

From this state, the bladders 102 are further inflated to bend the end of the air bladder body member 103 toward nearly a right angle by means of the bladders 102, and thereafter cylindrical bodies 104 are displaced from outside toward inside of the width direction of the drum. The widthwise outer surfaces of the bladders 102 are pushed by the cylindrical bodies 104 and displaced toward the inside of the width direction of the drum with the air bladder component member 103. As a result, as shown in FIG. 3, the air bladder body member 103 is folded. Each end is folded, overlapped or abutted with each other, and then joined with each other to form a hollow toric air bladder body portion 105, as shown in FIG. 4.

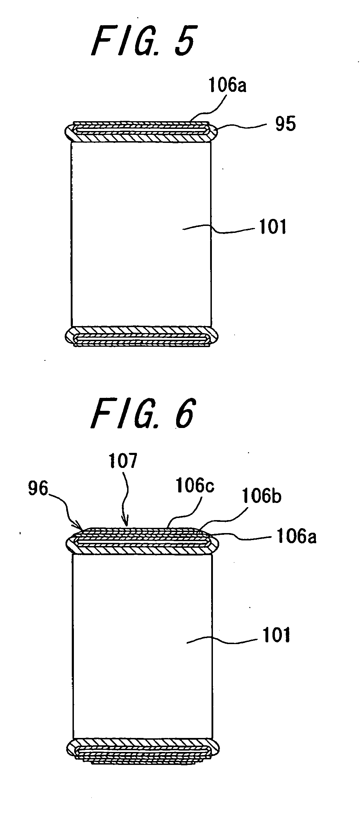

Subsequently, as shown in FIGS. 5 and 6, reinforcing layers 106a, 106b and 106c are sequentially wrapped radially outside of the air bladder body portion 105 along the circumferential direction of the tire, thereby forming a radial expansion-suppressing member 107 for suppressing a radial expansion.

During the manufacturing and storage after the manufacturing, mutually facing inner surfaces of the air bladder are likely to be in contact with each other. For this reason, if unvulcanized rubber is used as the air bladder component member, the contacted portions are stuck with each other, which makes it impossible to fold the air bladder component member normally or causes a defect of the shape in the subsequent vulcanizing step. In order to prevent this, it has been employed to use a partially vulcanized air bladder component member or apply a release agent such as stearic acid or silicone on the inner surface of the unvulcanized air bladder component member. However, when partially vulcanized rubber is used as the air bladder component member, the number of times for vulcanization is increased as compared with the case where unvulcanized rubber is used as the air bladder component member, which causes a problem that the production efficiency is decreased and the production cost is increased. On the other hand, when a release agent such as stearic acid is applied, a defect of melt adhesion is caused during the joining due to the release agent being caught between the joined surfaces of the ends of the air bladder body member, which remarkably decreases the durability of the air bladder and may cause an accumulation of the release agent scattered in the operation processes on the floor of the operation area to lead to dirt in the operation area or an accident of the operator slipping. In addition, it is highly time-consuming and decreases the productivity in building the air bladder that a solid release agent is uniformly applied without any unevenness.

Moreover, maintaining the internal pressure of the air bladder for a long term is an important object, and, to this end, it has been employed that the air bladder body member 103 is configured with an air-impermeable inner liner member and a pressure-maintaining member for maintaining the shape of the air bladder against the internal pressure filled in the air bladder, with the inner liner member being arranged to surround the entire surface of the hollow toric body. However, the internal pressure of the air bladder may be remarkably decreased after a long time, so that the air bladder may not sufficiently function if the tire is punctured after such a long time. Accordingly, it is demanded to further improve the air-impermeability (performance of preventing air permeation).

The present invention has been developed in view of these problems, and its object is to provide an air bladder with higher air-impermeability which can prevent facing inner surfaces of an air bladder having a hollow toric body during manufacturing or storage from being stuck, and to provide a safety tire using such an air bladder.

The invention is defined by the features of claim 1.

<1> The present invention is an air bladder for a safety tire which is to be accommodated in a tire and filled with air at a given internal pressure to form a cavity at least between the air bladder and an inner surface of a tread portion of the tire under the normal internal pressure state of the tire and to radially expand with a decrease in the internal pressure of the tire to take over load support from the tire, said air bladder comprising a hollow toric body bearing a tension caused by the internal pressure and an air-impermeable layer arranged on inner surfaces of the hollow toric body to maintain the internal pressure of the air bladder, wherein at least a part of the inner surfaces are configured with an air-impermeable resin film layer for preventing the inner surfaces from being stuck with each other. As used herein, the term "the normal internal pressure state" refers to the internal pressure regulated for a safety tire accommodating the air bladder by an industrial specification, standard or the like such as JATMA, TRA and ETRTO which are effective in the area where the tire is manufactured, sold or used, and specified according to the load capacity. The term a "given internal pressure" of the air bladder refers to such an internal pressure that a cavity can be formed between the outer surface of the air bladder and the inner surface of the tire under the air-filled state such that the normal internal pressure state is applied to the tire, and that the air bladder can radially expand with a decrease in the internal pressure of the tire to take over load support from the tire under the runflat state when the internal pressure of the tire has been lost, and the internal pressure is preferably equal to or up to 20% more than the given internal pressure.

<2> In the air bladder for a safety tire according to the above item <1>, the air-impermeable layer is preferably an inner liner layer of air-impermeable rubber.

<3> In the air bladder for a safety tire according to the above item <2>, supposing that A refers to the entire length of the inner surface in the widthwise section of the hollow toric body, B refers to an extending length of the inner liner layer along the inner surface, and C refers to an extending length of the resin film layer along the inner surface, it is preferable that the length B is larger than the length A, the length C is within a range of 0.5A to (2A-B), and the resin film layer is disposed outside of the region where the inner liner layers are overlapped.

<4> In the air bladder for a safety tire according to the above item <2> or <3>, an air permeability of the inner liner layer at 60 degrees C is preferably within a range of 3.75 x 10⁻⁸ cm³*cm/(cm²*s*Pa) to 2.25 x 10⁻⁶ cm³*cm/(cm²*s*Pa) and the thickness of the inner liner layer is preferably within a range of 0.3 mm to 5.0 mm.

<5> In the air bladder for a safety tire according to the above item <1>, the air-impermeable layer is configured by covering the entire inner surfaces of the hollow toric body with the resin film layer, according to the invention.

<6> In the air bladder for a safety tire according to the above item <5>, the resin film layer is melt adhered to the hollow toric body, according to the invention.

<7> In the air bladder for a safety tire according to any one of the above items <1> to <6>, an air permeability of the resin film layer at 60 degrees C is preferably within a range of 7.5 x 10⁻¹⁸ cm³*cm/(cm²*s*Pa) to 15 × 10⁻¹⁶ cm³*cm/(cm²*s*Pa) and the thickness of the resin film layer is preferably within a range of 10 µm to 4.0 mm.

<8> In the air bladder for a safety tire according to any one of the above items <1> to <6>, a spud for fixing a valve for filling an internal pressure is preferably attached onto the inner surface of the resin film.

<9> In the air bladder for a safety tire according to any one of the above items <1> to <8>, a spud for fixing a valve for filling an internal pressure is preferably attached onto the inner surface of the resin film, and the resin film layer is arranged except for a spud-applying region to which the spud is to be attached.

<10> In the air bladder for a safety tire according to any one of the above items <1> to <9>, the resin film layer is preferably selected from a group consisting of thermoplastic polyurethane resin, thermoplastic polyolefin resin, polyethylene resin, polypropylene resin, polybutadiene resin, polyvinylidene chloride resin and combinations thereof.

<11> In the air bladder for a safety tire according to any one of the above items <1> to <10>, a radial expansion suppressing layer for suppressing a radial change under the normal internal pressure state is preferably arranged on the radially outer surface of the hollow toric body. The radial expansion suppressing layer is preferably configured with a compound material of a fiber selected from an organic fiber including polyester and polyamide and a rubber, which makes it possible to function the radial expansion suppressing layer at a desired performance.

<12> The present invention is also a safety tire which accommodates the air bladder for a safety tire according to any one of the above items <1> to <11>.

With the features recited in the above item <1>, it is possible to prevent the mutually facing inner surfaces of the hollow toric body from being stuck with each other during manufacturing and storage, and to simultaneously enhance the air-impermeability.

With the feature recited in the above item <2>, the inner liner layer consisting of air-impermeable rubber is arranged on the inner surface of the hollow toric body, so that air-impermeability can be further enhanced by disposing a resin film on the inner surface of the inner liner layer.

With the feature recited in the above item <3>, supposing that A refers to the entire length of the inner surface in the widthwise section of the hollow toric body, B refers to an extending length of the inner liner layer along the inner surface, and C refers to an extending length of the resin film layer along the inner surface, the length B is larger than the length A; in other words, the width ends of the inner liner are overlapped and joined with each other, so that the joining is assured to prevent air from passing therethrough. In addition, the film layer is arranged outside of the region where the inner liner layers are overlapped with each other (in this state, the extending length C of the resin film layer is not more than (2A-B) which is calculated by subtracting the overlapping length (B-A) from the length A), so that the width ends of the inner liner layer can be directly placed one on the other without interposing the resin film layer therebetween to strengthen the joining portion. Furthermore, the length C is not less than a half of the length A, so that the inner surfaces can be securely prevented from being stuck with each other.

With the feature recited in the above item <4>, an air permeability of the inner liner layer at 60 degrees C is within a range of 3.75 x 10⁻⁸ cm³*cm/(cm²*s*Pa) to 2.25 x 10⁻⁶ cm³*cm/(cm²*s*Pa) and the thickness of the inner liner layer is within a range of 0.3 mm to 5.0 mm, so that the internal pressure can be maintained for a long time in a preferable manner. When an air permeability of the inner liner layer is more than 2.25 x 10⁻⁶ cm³*cm/(cm²*s*Pa) or the thickness of the inner liner layer is less than 0.3 mm, it is difficult to maintain a sufficient internal pressure for a long time. On the other hand, when an air permeability of the inner liner layer is less than 3.75 x 10⁻⁸ cm³*cm/(cm²*s*Pa) or the thickness of the inner liner layer is more than 5.0 mm, the production cost is increased with the increase in the weight of the inner liner layer since the member constituting the inner liner layer is combined with an expensive special rubber.

With the feature recited in the above item <5>, an inner liner layer consisting of an air-impermeable rubber is not necessarily used and, instead, the resin film layer is configured to possess the function of the air-impermeable layer so that a reduced cost and simplification of the process can be achieved without providing the inner liner layer. In addition, the length A of the inner surface of the hollow toric body is more than the extending length C of the resin film layer along the inner surface, in other words, the resin film is so configured as to cover the entire inner surface of the hollow toric body, so that a prevention of mutual sticking of the inner surface of the air bladder and the sealing of the leakage of air to the surroundings can be simultaneously realized with a single layer.

With the feature recited in the above item <6>, the air bladder for a safety tire is configured such that the resin film layer is melt adhered to the hollow toric body, which can prevent a gap during folding the hollow toric body and a misalignment between the resin film layer and the hollow toric body.

With the feature recited in the above item <7>, an air permeability of the resin film layer at 60 degrees C is within a range of 7.5 x 10⁻¹⁸ cm³*cm/(cm²*s*Pa) to 15 x 10⁻¹⁶ cm³*cm/(cm²*s*Pa) and the thickness of the resin film layer is within a range of 10 µm to 4.0 mm, so that it is possible to simultaneously realize the maintenance of the internal pressure for a long time and improvement of the operation efficiency in building the air bladder. When an air permeability is more than 15 x 10⁻¹⁶ cm³*cm/(cm²*s*Pa) or the thickness of the resin film layer is less than 10 µm, the internal pressure of the air bladder cannot be maintained for a long time and thus the air bladder may not function as desired in the case of the tire being punctured. On the other hand, when an air permeability is less than 7.5 x 10⁻¹⁸ cm³*cm/(cm²*s*Pa) or the thickness of the resin film layer is more than 4.0 mm, the stiffness of the resin film member becomes high and it is difficult to deform the resin film member during the building operation, so that the operation efficiency of the building operation is decreased.

With the feature recited in the above item <8>, a spud for fixing a valve for filling an internal pressure is attached onto the inner surface of the resin film, so that it is not necessary to arrange the resin film layer while avoiding the area to which the valve is to be attached and thus the productivity in the process of assembling the resin film layer during the building step can be improved.

With the feature recited in the above item <9>, a spud for fixing a valve for filling an internal pressure is attached onto the inner surface of the resin film, and the resin film layer is arranged except for a spud-applying region to which the spud is to be attached, so that the spud may be attached not onto the resin film layer but onto a member of another layer exposed to the inner surface and thud the spud can be attached without using an adhesive, which makes the operation of attaching the spade easier.

With the feature recited in the above item <10>, the resin film layer is selected from a group consisting of thermoplastic polyurethane resin, thermoplastic polyolefin resin, polyethylene resin, polypropylene resin, polybutadiene resin, polyvinylidene chloride resin and combinations thereof, so that the resin film layer can prevent the sticking of the inner surfaces, improve air permeability, and facilitate the operation of building the air bladder with taking advantage of property ranges of tensibility, stiffness, surface property, air permeability and the like.

With the feature recited in the above item <11>, a radial expansion suppressing layer for suppressing a radial change under the normal internal pressure state is arranged on the radially outer surface of the hollow toric body, so that a radial deformation of the air bladder can be prevented to be maintained in a desired shape under the normal running state and can be inflated to support the tire when the tire is punctured.

With the feature recited in the above item <12>, a safety tire comprising the air bladder having any one of the features recited in the above items <1> to <11> also has the above-mentioned feature(s), so that the mutually facing inner surfaces of the air bladder can be prevented from sticking with each other during manufacturing and storage and can simultaneously enhance the air-impermeability of the air bladder. This enables driving over a certain distance under a runflat state where the internal pressure of the tire is suddenly decreased due to puncture of the tire or the like.
The invention will be further described with reference to the accompanying drawings, wherein

[FIG. 1] FIG. 1 is a widthwise sectional view of an air bladder for explaining a conventional method of manufacturing an air bladder.
[FIG. 2] FIG. 2 is a widthwise sectional view of an air bladder for explaining a step subsequent to the step shown in FIG. 1.
[FIG. 3] FIG. 3 is a widthwise sectional view of an air bladder for explaining a step subsequent to the step shown in FIG. 2.
[FIG. 4] FIG. 4 is a widthwise sectional view of an air bladder for explaining a step subsequent to the step shown in FIG. 3.
[FIG. 5] FIG. 5 is a widthwise sectional view of an air bladder for explaining a step subsequent to the step shown in FIG. 4.
[FIG. 6] FIG. 6 is a widthwise sectional view of an air bladder for explaining a step subsequent to the step shown in FIG. 5.
[FIG. 7] FIG. 7 is a sectional view of a first embodiment of an air bladder for a safety tire according the present invention shown in a state where the air bladder is mounted in a circular space surrounded by the tire and the rim and filled with air at a given internal pressure.
[FIG. 8] FIG. 8 is a widthwise sectional view of the air bladder for explaining a step of building the first embodiment of the air bladder for a safety tire.
[FIG. 9] FIG. 9(a) is a widthwise sectional view of the air bladder for explaining a step subsequent to the step shown in FIG. 8, and FIG. 9(b) is a sectional view taken along the arrow in FIG. 9(a).
[FIG. 10] FIG. 10 is a plan view showing a resin film member.
[FIG. 11] FIG. 11 is a widthwise sectional view of the air bladder for explaining a step subsequent to the step shown in FIG. 9.
[FIG. 12] FIG. 12 is a widthwise sectional view of the air bladder for explaining a step subsequent to the step shown in FIG. 11.
[FIG. 13] FIG. 13(a) is a plan view showing a spud, and FIG. 13(b) is a sectional view showing the spud.
[FIG. 14] FIG. 14 is a widthwise sectional view of the air bladder for explaining a step subsequent to the step shown in FIG. 12.
[FIG. 15] FIG. 15 is a widthwise sectional view of the air bladder for explaining a step subsequent to the step shown in FIG. 14.
[FIG. 16] FIG. 16 is a sectional view of a second embodiment of an air bladder for a safety tire according the present invention shown in a state where the air bladder is mounted in a circular space surrounded by the tire and the rim and filled with air at a given internal pressure.
[FIG. 17] FIG. 17 is a widthwise sectional view of the air bladder for explaining a step of building a second embodiment of the air bladder for a safety tire.
[FIG. 18] FIG. 18 is a widthwise sectional view of the air bladder for explaining a step subsequent to the step shown in FIG. 17.
[FIG. 19] FIG. 19 is a widthwise sectional view of the air bladder for explaining a step subsequent to the step shown in FIG. 18.
[FIG. 20] FIG. 20 is a widthwise sectional view of the air bladder for explaining a step subsequent to the step shown in FIG. 19.
[FIG. 21] FIG. 21 is a widthwise sectional view of the air bladder for explaining a step subsequent to the step shown in FIG. 20.
[FIG. 22] FIG. 22 is a widthwise sectional view of the air bladder for explaining a step subsequent to the step shown in FIG. 21.
[FIG. 23] FIG. 23 is a sectional view of a third embodiment of an air bladder for a safety tire according the present invention shown in a state where the air bladder is mounted in a circular space surrounded by the tire and the rim and filled with air at a given internal pressure.
[FIG. 24] FIG. 24 is a widthwise sectional view of the air bladder for explaining a step of building the third embodiment of the air bladder for a safety tire.

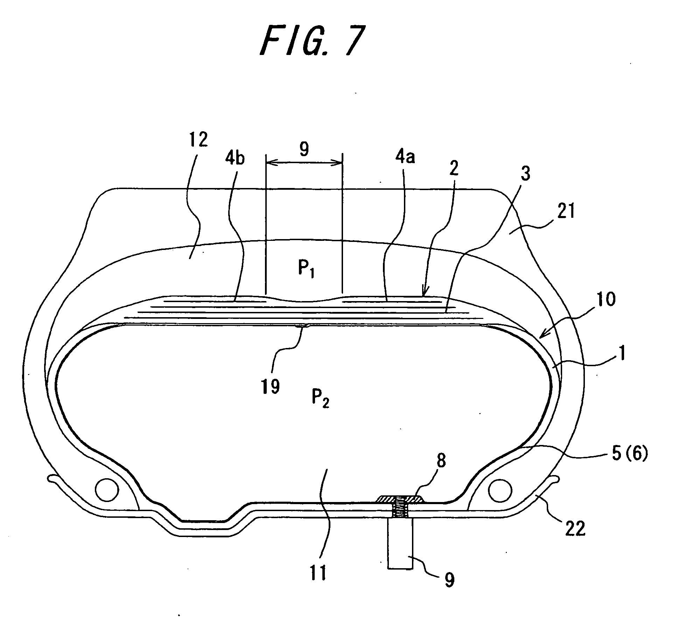

Embodiments of the present invention will be described with reference to the drawings. FIG. 7 is a sectional view of a first embodiment of an air bladder 10 for a safety tire according the present invention shown in a state where the air bladder 10 is mounted in a circular space 12 surrounded by a tire 21 and a rim 22 and filled with air at a given internal pressure. The air bladder 10 has an air-impermeable layer 5 for preventing the pressurized air filled in a hollow portion 11 from passing therethrough to the surroundings, a pressure maintaining portion 1 which is a hollow toric body maintaining its shape against the internal pressure P₂ of the hollow portion 11, and a radial expansion suppressing portion 2 suppressing an expansion of the air bladder 10 in the radial direction in addition to maintenance of the internal pressure P₂. The air bladder 10 is provided with a spud 8, which is for attaching a valve 9 for filling air in the hollow portion 11, and the valve 9.

In the section of the air bladder 10, the air-impermeable layer 5 is arranged to cover the entire circumferential face surrounding the hollow portion 11. If there exists even a small part which is not covered by the air-impermeable layer 5, air impermeability of the air bladder is remarkably decreased.

The pressure maintaining portion 1 is arranged over the entire air bladder, and a radial expansion suppressing portion 2 is attached onto the outer surface of the hollow toric body along the circumferential direction of the drum. It is noted that the pressure maintaining portion 1 may be configured by rubber alone, or a compound material containing rubber and fibers. The radial expansion suppressing portion 2 is composed of rubber or the like, and has one or more reinforcing layer 3 within it. Inside the radial expansion suppressing portion 2, a plurality pairs of surface layers 4a, 4b are arranged on the reinforcing layer 3 in the radially outside. In this way, when the tire is punctured and the air bladder 10 is inflated, the widthwise center of the air bladder firstly contact the inner face of the tire and therefore the air bladder 10 takes over the tire load support in a symmetric and well-balanced manner. That is, it is possible to achieve a stable runflat running in a state where the internal pressure of the tire is decreased due to a puncture or the like, and prevention of a failure in an early stage due to an inflation of the air bladder under the normal internal pressure of the tire.

The air-impermeable layer 5 of the present invention may consist of a resin film layer alone, or a combination of a resin film layer and inner liner layer. In this connection, the means of constituting the air-impermeable layer may be a case where a resin film layer is provided on the inner surface of the hollow toric body by means of thermal adhesion, or a case where an inner liner layer is attached onto the inner surface of the hollow toric body and then a resin film layer is provided on the inner surface of the inner liner layer by means of thermal adhesion. Among these, the first embodiment as shown in FIG. 7 illustrates a case where the air-impermeable layer 5 consists of a resin film layer by way of example. In this case, by making the extending length C of the resin layer along the inner surface surrounding the hollow portion 11 of the hollow toric body greater than the entire circumferential length A of the inner surface as viewed in the widthwise sectional view of the air bladder, the overlapping length 19 (which is expressed as (C-A)) in the state of joining the width ends of the sheet-like resin film layer 6 to be the hollow toric body can be assured.

The air permeability of the resin film resin layer 6 is preferably within a range of 7.5 x 10⁻¹⁸ cm³*cm/(cm²*s*Pa) to 15 x 10⁻¹⁶ cm³*cm/(cm²*s*Pa) and the thickness of the resin film layer is preferably within a range of 10 µm to 4.0 mm.

It is an essential requirement for the present invention to provide an anti-stick function to the resin film layer 6 as well as to have an air-permeable property. The former prevents the inner surfaces of the air bladder 10 from being stuck with each other during the manufacturing and storage of the air bladder 10.

As a material of the resin for preventing the resin films from being stuck with each other, polyvinylidene chloride resin film (e.g. Saran Wrap®) and polyvinylidene chloride resin may be recited by way of example.

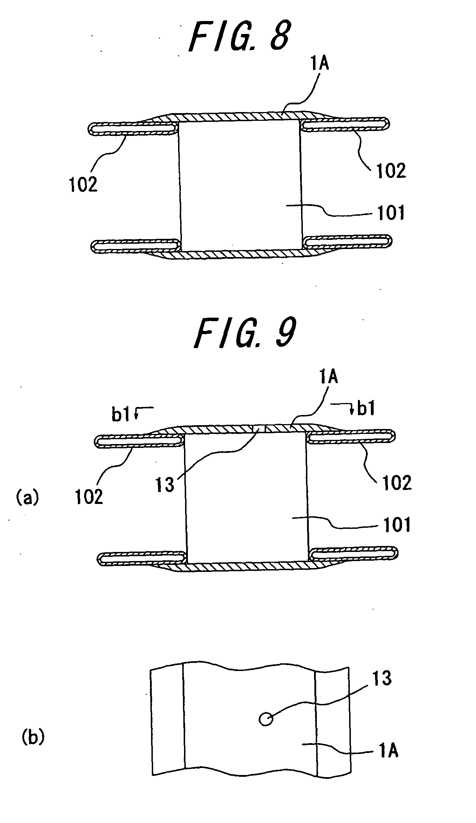

FIGS. 8, 9(a), 11, 12, 14 and 15 are sectional views showing processes in which each member constituting the air bladder 10 is assembled on the building drum. For building the air bladder 10 of the first embodiment, as shown in FIG. 8, a pressure-maintaining member 1A corresponding to the air maintaining portion 1 is assembled on the building drum 101 and bladders 102. The pressure-maintaining member 1A may be preliminarily formed in a ring shape with another building drum or the like, or a sheet-like member may be wrapped around the building drum 101 and then both ends in the circumferential direction of the drum are mutually joined to form a ring.

Thereafter, as shown in FIG. 9(a), a valve through hole 13 for attaching a valve is provided in the pressure-maintaining member 1A while the pressure-maintaining member 1A is disposed on the building drum 101. It is noted that the FIG. 9(b) is a sectional view taken along the arrow b1-b1 in FIG. 9(a).

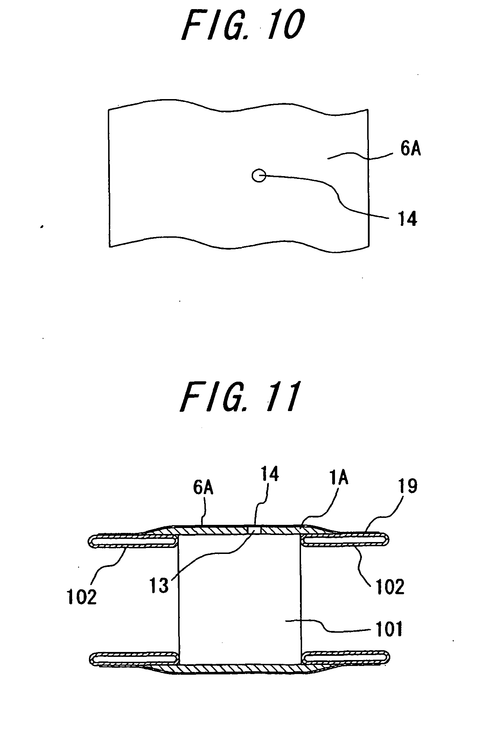

Then, a sheet-like member in which a hole is provided at the position where the valve will pass through as shown in FIG. 10 is wrapped around the outside of the pressure-maintaining member 1A, as shown in FIG. 11, to assemble a resin film member 6A. When the sheet-like member is wrapped around, the starting position of the wrapping has to be adjusted in such a manner that the hole 14 agrees with the through hole 13. In addition, after the wrapping, an adhesive for joining both ends of the sheet-like member in the circumferential direction of the drum is applied on at least one end of both ends of the sheet-like member.

Furthermore, in order not to misalign the resin film member 6A with respect to the pressure-maintaining member 1A consisting mainly of rubber at the time of assembling the resin film member 6A, it is preferred that an adhesive is applied on the entire surface of the resin film, or that a resin film member 6A having a good adhesive property for rubben is used, or that the hollow toric body and the resin film member are thermally adhered. As a material which does not have a self sticking property but has a good adhesive property for rubber, the above-mentioned polyvinylidene chloride resin film (e.g. Saran Wrap®) and polyvinylidene chloride resin may be recited by way of example.

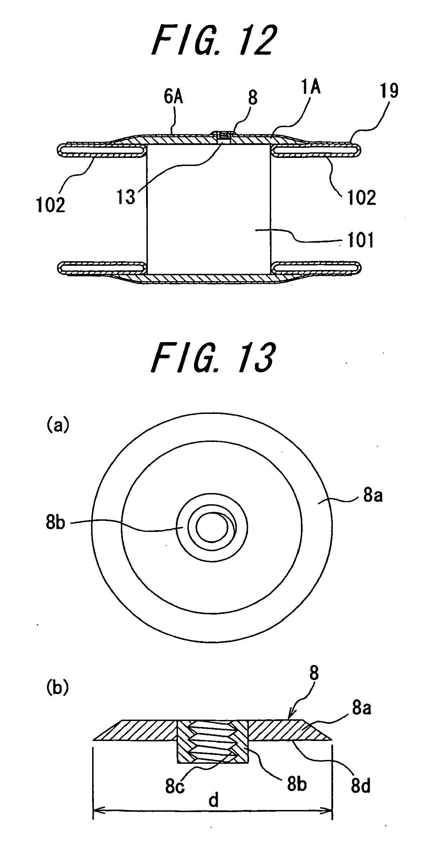

Subsequently, as shown in FIG. 12, a spud 8 for installing the air bladder valve is attached onto the resin film member 6A. As shown in FIGS. 13(a) and (b) in a plan view and a sectional view, respectively, the spud 8 consists of a tuncated cone-like spud body 8a made of rubber and a cylindrical threaded member 8b arranged to pass through the central portion of the spud body. An internal threaded portion 8c for screwing the valve is formed on the inner surface of the threaded member 8b.

In this connection, the threaded portion 8b is arranged to protrude from the bottom face 8d (diameter d) of the spud body 8a. The spud 8 is adhered onto the resin film member 6A by means of a adhesive in such a manner that the portion protruding from the bottom face 8d of the threaded member 8b is accommodated in the through hole 13.

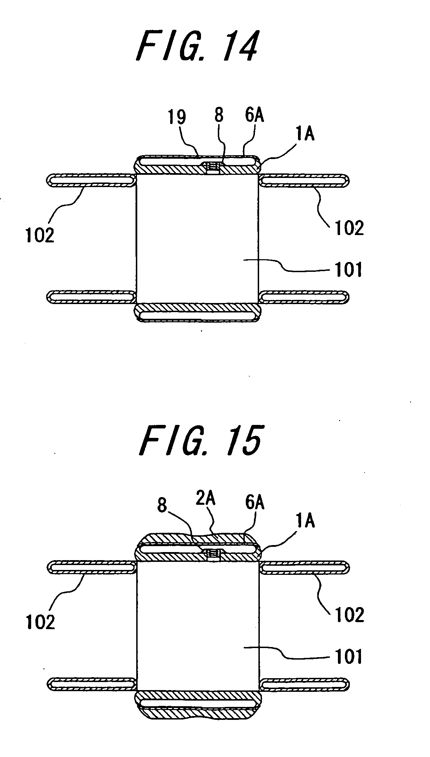

Then, as discussed with reference to the prior art, the bladders 102 and the cylindrical body (not shown) are used to fold both width ends of the resin film member 6A provided with the pressure-maintaining member 1A, and the width ends are joined with each other, as shown in FIG. 14. It is noted that applying an adhesive on the width ends 19 of the resin film member 6A ensures a joint after the folding.

Thereafter, one or more reinforcing layers is wrapped around and a radial expansion-suppressing member 2A to be a radial expansion-suppressing portion 2 is assembled. The air bladder constituting member thus obtained is vulcanized and shaped to form the air bladder 10.

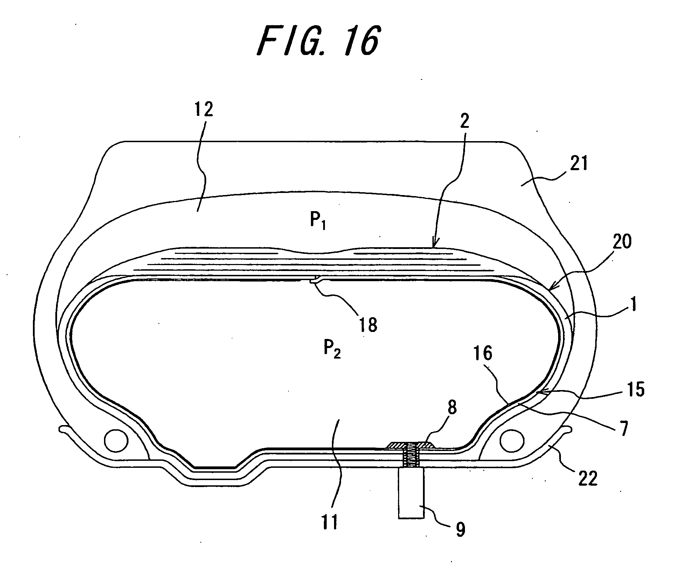

FIG. 16 is a sectional view of an air bladder 20 for a safety tire according a second embodiment shown in a state where the air bladder is mounted in a circular space 12 surrounded by the tire 21 and the rim 22 and filled with air at a given internal pressure. In this state, the air bladder 20 becomes a hollow toric body and is the same as the air bladder 10 of the first embodiment in
that it has an air-impermeable layer 15 preventing permeation of the pressurized air filled in a hollow portion 11, a pressure-maintaining portion 1 maintaining the shape against the internal pressure P₂ of the hollow portion 11, and a radial expansion-suppressing portion 2 suppressing a radial expansion of the air bladder 20 as well as maintaining the internal pressure P₂. The difference
is that the air-impermeable layers 15 consist of an air-impermeable resin film layer 16 and an air-impermeable inner liner layer 7, and that, in a widthwise sectional view of the air bladder, the inner liner layer covers the inner surface of the hollow toric body of the inner liner 7 in its entire circumference and the resin film is so configured as to cover the entire inner surface of the inner liner layer 7.

In this case, by making the entire length A of the inner surface surrounding the hollow portion 11 of the hollow toric body greater than the extending length B of the inner liner layer 7 along the inner surface, the overlapping length 18 (which is (B-A)) in the process of joining the width ends of the inner liner layer 7 with each other to form a hollow toric shape can be ensured.

In addition, by making the extending length C of the resin film layer 16 along the inner surface identical to or slightly smaller than the length (2A-B) which is obtained by subtracting the overlapping length (B-A) from the entire circumferential length A, the resin film layer 16 can be arranged over generally the entire circumference of the inner liner layer 7 except for the overlapping portion. In this connection, the reason why the extending length of the resin film layer 16 is set to be shorter than that of the inner liner layer 7 to not extend to the overlapping portion is as follows. If the resin film layer 16 has a length identical to that of the inner liner layers 7, the resin film layer 16 may be interposed between the inner liner layers 7 to be joined through adhesion in the process of shaping the inner liner layers into a hollow torus, which makes the adhesion between the inner liner layers unreliable. As a result, it is likely to leak air from the portion where the adhesion is failed to the environment.

An air permeability of the inner liner layer 7 is preferably within a range of 3.75 x 10⁻⁸ cm³*cm/(cm²*s*Pa) to 2.25 x 10⁻⁶ cm³*cm/(cm²*s*Pa) and the thickness of the inner liner layer is preferably within a range of 0.3 mm to 5.0 mm. An air permeability of the resin film layer 6 is preferably within a range of 7.5 x 10⁻¹⁸ cm³*cm/(cm²*s*Pa) to 15 x 10⁻¹⁶ cm³*cm/(cm²*s*Pa) and the thickness of the resin film layer is preferably within a range of 10 µm to 4.0 mm.

It is also an essential requirement for the present invention to provide an anti-stick function to the resin film layer 6 as well as to have an air-permeable property. The former prevents the inner surfaces of the air bladder 10 from being stuck with each other during the manufacturing and storage of the air bladder 10.

In the case of the resin film layer 16 of the second embodiment, most of the inner surface is covered by the resin film layer 16, so that polyvinylidene chloride resin film (e.g. Saran Wrap®) and polyvinylidene chloride resin may be used. However, in the case of preventing the portion 18 which is not covered by the resin film layer 16 from being stuck, it is preferred to use a resin selected from a group consisting of thermoplastic polyurethane resin, thermoplastic polyolefin resin, polyethylene resin, polypropylene resin and a combination thereof, which do not stick to rubber.

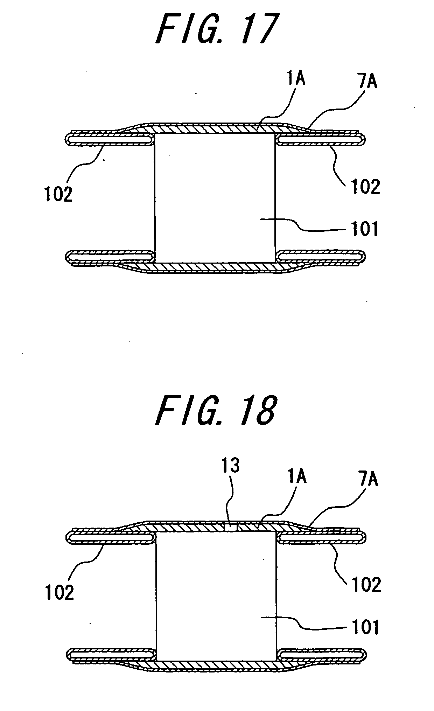

FIGS. 17-21 and FIG. 22(a) are sectional views showing processes of assembling each member constituting the air bladder 20 onto the building drum. In order to build the air bladder 20 of the second embodiment, the pressure maintaining member 1A corresponding to the air maintaining portion 1 is assembled on the building drum 101 and bladders 102 as shown in FIG. 8, and then the inner liner member 7A is circumferentially wrapped around and assembled on the outside of the pressure maintaining member 1A as shown in FIG. 17. Thereafter, the through hole 13 for attaching the valve 9 is fabricated on these members 1A and 7A while the members 1A and 7A are still disposed on the building drum 101 as shown in FIG. 18. Subsequently, the sheet-like member in which a hole 14 is preliminarily provided to align the valve (see FIG. 10) is circumferentially wrapped around and the resin film member 16A is assembled.

Furthermore, in order not to misalign the resin film member 16A with respect to the pressure-maintaining member 1A consisting mainly of rubber at the time of assembling, it is preferred that an adhesive is applied on the resin film member 16A, or that a resin film member 16A having a good adhesive property for rubber is used. When thermoplastic polyurethane resin, thermoplastic polyolefin resin, polyethylene resin, polypropylene resin or the like which does not adhere to rubber is used, it is needed to preliminarily apply an adhesive. On the other hand, when polyvinylidene chloride resin film (e.g. Saran Wrap®) and polyvinylidene chloride resin are used, it is not necessary to use an adhesive.

When a sheet-like resin film is wrapped around, as is the case with the first embodiment, the starting position of the wrapping has to be adjusted in such a manner that the hole 14 agrees with the through hole 13. In addition, after wrapping the resin film member 16A, an adhesive for joining both ends of the sheet-like member in the circumferential direction of the drum is applied on at least one end of both ends of the sheet-like member.

In this case, at least one of the width ends of the resin film member 16A is displaced inside of the width end of the inner liner member 7A to expose the overlapping portion 18 for joining the width ends of the inner liner member 7A with each other.

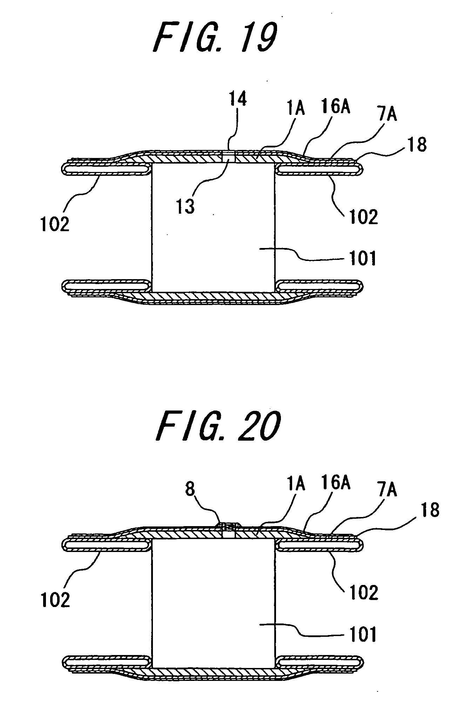

Then, as shown in FIG. 20, the spud 8 for installing the valve is attached onto the resin film member 16A. The configuration of the spud 8 is the same as explained with reference to FIGS. 13(a) and (b).

Thereafter, as explained above for the prior art, the bladders 102 and the cylindrical body (not shown) are moved to fold both end portions of the inner liner member 7A on which the pressure-maintaining member 1A and the resin film member 16A are integrally assembled, so that both the width ends of the inner liner member 7A are overlapped and joined with each other. In this state, a gap exists between the ends of the resin film members, so that these ends can be crimped to be joined without interposing the resin film member 16A therebetween. This makes the joining more secure.

Subsequently, as is the case explained with reference to FIG. 15 for the first embodiment, one or more reinforcing layers is wrapped around, and the radial expansion-suppressing member 2A to be the radial expansion-suppressing portion 2 is assembled to complete the building of the air bladder-constituting member. The air bladder 20 is formed by vulcanizing the air bladder-constituting member.

Regarding the attachment of the spud 8 for installing the valve 9, the spud may be attached onto the resin film member 16A as shown in FIG. 20. Alternatively, the spud 8 may be attached directly onto the inner liner member 7A. In the latter case, the attachment is done through an adhesion of the members made of rubber, so that the adhesion can be made stronger as well as being able to be eliminate adhesive.

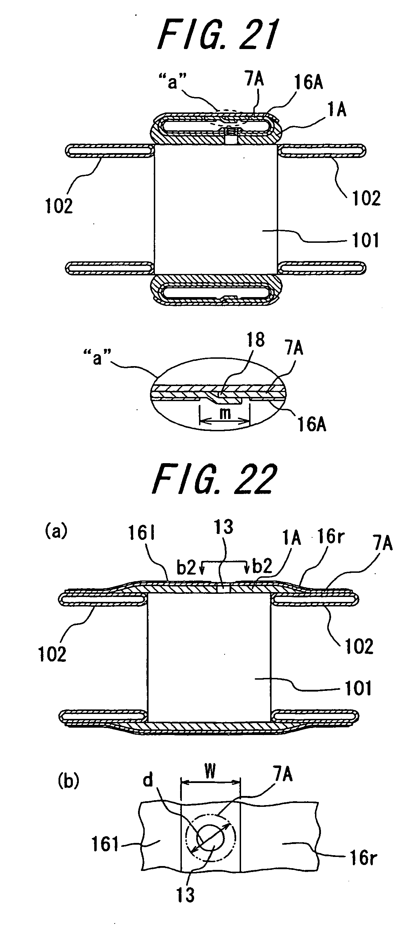

FIG. 22(a) is a sectional view showing how the spud 8 is attached in this alternative method, and FIG. 22(b) is a sectional view taken along the line b2-b2 in the FIG. 22(a). In the alternative method, instead of wrapping a sheet-like resin film member in which the hole 14 is pierced, a sheet-like member is wrapped and resin film members 161 and 16r are assembled on the region except the widthwise region W including the region with diameter d to which the bottom face 8d of the spud body 8a is applied. As a result, it is possible to expose the inner liner layer 7A at the widthwise region W and to attach the spud 8 directly onto the inner liner member 7A.

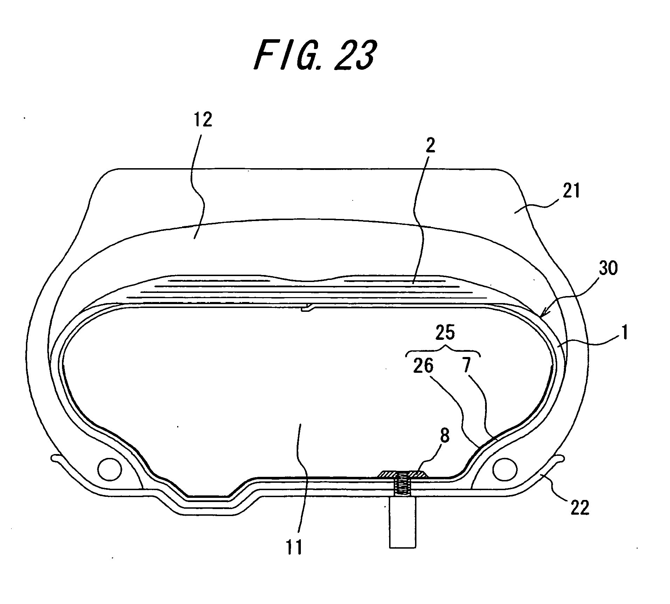

FIG. 23 is a sectional view of an air bladder 30 for a safety tire of a third embodiment shown in a state where the tire 21 is mounted on the rim 22 and a given internal pressure is filled in the circumferential space 12 surrounded by the tire 21 and the rim 22. In this state, the air bladder 30 has a hollow toric shape, and has an air-impermeable layer 25 which prevents the pressurized air filled in the air bladder from permeating to the environment, the pressure-maintaining portion 1 maintaining the shape against the internal pressure P₂ of the hollow portion 11, and the radial expansion-suppressing portion 2 suppressing the radial expansive deformation of the air bladder 30 in addition to the maintenance of the internal pressure P₂. The air-impermeable layer 25 consists of the inner liner layer 7 attached onto the inner surface of the hollow toric body and a resin film member 26 attached onto the inner surface of the inner liner layer 7. It is noted that the inner liner layer 7 is attached in such a manner that it surrounds the entire circumference of the hollow portion 11.

The air bladder 30 for a safety tire according to this embodiment is the same as the air bladder 20 according to the second embodiment as mentioned in the above, but differs in that the resin film layer 26 constituting the air-impermeable layer 25 extends only radially inside of radial positions Q1 and Q2 corresponding to the maximum width of the air bladder. This embodiment is an example in which the resin film layer 26 has a prime function of preventing the inner surface of the air bladder 30 from being stuck with each other, and the function of preventing air in the hollow portion 11 from leaking to decrease the internal pressure is taken mainly by the inner liner layer and supplementarily by the resin film layer 26.

The resin film layer 26 extends only inside of the radial positions corresponding to the maximum width in the widthwise sectional view, so that the extending length C is a half of or slightly longer than the entire length A of the circumference surrounding the hollow portion 11. This configuration ensures the prevention of the sticking of the inner surfaces as well as suppressing the resin film layer to the minimum volume.

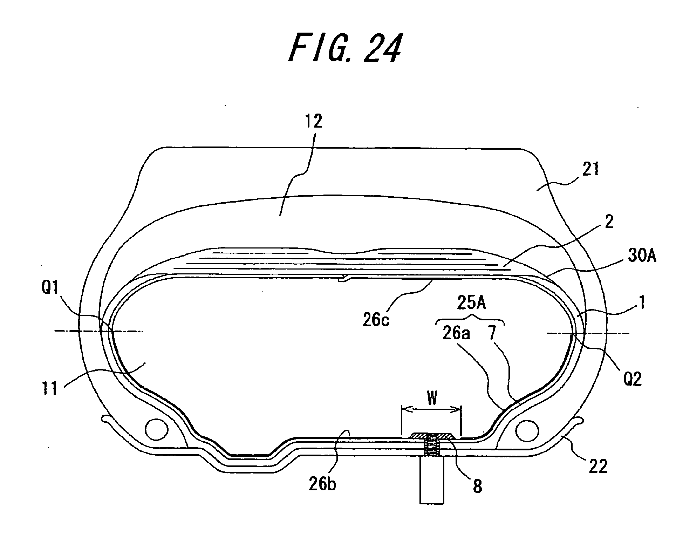

As shown in FIG. 23, in this embodiment also, the spud 8 for installing the valve 9 may be directly attached onto the resin film layer 26 with an adhesive, or, alternatively, as shown in FIG. 24, the resin film member 26a, 26b may be disposed in regions except for the region to which the spud 8 is provided in the width direction so that the spud 8 directly adheres to the inner liner layer 7. In this case, a resin film layer 26c is preferably provided to avoid the sticking of the exposed inner liner 7A with the opposing face.

Several kinds of air bladders having a resin film layer are manufactured as examples and these examples are evaluated for air-impermeability and productivity in the building process. Further, an air bladder in which stearic acid is applied for the purpose of preventing stick in lieu of having a resin film layer is also manufactured and evaluated for the same properties above. The arranging ratios of the resin film in these examples are shown in Table 1.

The size of the tires accommodating these air bladders are 495/45R22.5. The inner liner layers are made of butyl rubber with thickness of 1.0 mm and air-permeability at 60 degree C of 18.75 x 10⁻¹⁸ cm³*cm/(cm²*s*Pa). The resin film layers are made of thermoplastic polyurethane resin with thickness of 50 µm and air-permeability at 60 degree C of 37.5 x 10⁻⁸ cm³*cm/(cm²*s*Pa).

In Table 1, the arranging ratio of the resin film refers to the ratio C/A of the extending length C of the resin film layer along the inner surface surrounding the hollow portion to the entire circumferential length A of the inner surface in the widthwise section of the air bladder constituting the hollow toric body. In a case where the resin film layer is arranged, it is arranged to extend from the inside in the radial direction to the radial positions symmetrical in the widthwise section (for example, Q1 and Q2 in FIG. 24).

Also in Table 1, the airtightness is evaluated by filling an internal pressure of 70 kPa in the air bladder and measuring the internal pressure after allowing for two weeks. The results are shown in index values with the measured internal pressure of Comparative example being set to 100. The greater index value means greater remaining internal pressure and better air-impermeability.

In addition, the productivities in the building process are evaluated by measuring the building time required for building one air bladder. The results are shown in index values by using the inverse number of the measured building time with the result of Comparative example being set to 100. The greater index value means shorter building time and higher productivity. The building time is the time measured from the beginning of wrapping the air bladder constituting member on the building drum to taking it off from the building drum.

**Table 1**

| | Resin film arranging ratio | With or without inner liner layer | Airtightness | Productivity in building process |
|---|---|---|---|---|
| Comparative example 1 | None | With | 100 | 100 |
| Example 1 | 0.6 | With | 110 | 120 |
| Example 2 | 0.75 | With | 120 | 120 |
| Example 3 | 1 | Without | 105 | 110 |
| Example 4 | 0.95 | With | 130 | 105 |

As can be clearly seen in Table 1, the Examples are superior to the Comparative example in both of the airtightness and productivity.

In terms of the sticking prevention property, those having no defect in manufacturing are used for all of the Comparative example and Examples 1-4 and this is verified one week after the air bladder being built, by checking the presence of sticking between the inner surfaces and by checking the presence of peeling of the joining portion between the resin film layer and the inner liner layer.

An air bladder according to the present invention is applicable to various kinds of pneumatic tires having different sizes and structures.

## Claims

1. An air bladder (10) for a safety tire which is to be accommodated in a tire (21) and filled with air at a given internal pressure to form a cavity at least between the bladder and an inner surface of a tread portion of the tire under the normal internal pressure state of the tire and to radially expand with a decrease in the internal pressure of the tire to take over load support from the tire,
said air bladder (10) comprising a hollow toric body bearing a tension caused by the internal pressure and an air-impermeable layer (5) arranged on inner surfaces of the hollow toric body to maintain the internal pressure of the air bladder, wherein at least a part of the inner surfaces are configured with an air-impermeable resin film layer (6) for preventing the inner surfaces from being stuck with each other, **characterized in that**
the air-impermeable layer (5) is configured by covering the entire inner surfaces of the hollow toric body with the resin film layer (6), and wherein the resin film layer is melt adhered to the hollow toric body.

2. An air bladder for a safety tire as claimed in claim 1, wherein the air-impermeable layer (5) is an inner liner layer of air-impermeable rubber.

3. An air bladder for a safety tire as claimed in claim 2, wherein supposing that A refers to the entire length of the inner surface in the widthwise section of the hollow toric body, B refers to an extending length of the inner liner layer along the inner surface, and C refers to an extending length of the resin film layer along the inner surface, the length B is larger than the length A, the length C is within a range of 0.5A to (2A-B), and the resin film layer is disposed outside of the region where the inner liner layers are overlapped.

4. An air bladder for a safety tire as claimed in claim 2 or 3, wherein an air permeability of the inner liner layer at 60 degrees C is within a range of 3.75 x 10⁻⁸ cm³*cm/(cm²*s*Pa) to 2.25 x 10⁻⁶ cm³*cm/(cm²*s*Pa) and the thickness of the inner liner layer is within a range of 0.3 mm to 5.0 mm.

5. An air bladder for a safety tire as claimed in any of claims 1 to 4, wherein an air permeability of the resin film layer at 60 degrees C is within a range of 7.5 x 10⁻¹⁸ cm³*cm/(cm²*s*Pa) to 15 x 10⁻¹⁶ cm³*cm/(cm²*s*Pa) and the thickness of the resin film layer is within a range of 10 µm to 4.0 mm.

6. An air bladder for a safety tire as claimed in any of claims 1 to 4, wherein a spud (8) for fixing a valve (9) for filling an internal pressure is attached onto the inner surface of the resin film.

7. An air bladder for a safety tire as claimed in any of claims 1 to 6, wherein a spud (8) for fixing a valve (9) for filling an internal pressure is attached onto the inner surface of the resin film, and the resin film layer is arranged except for a spud-applying region to which the spud is to be attached.

8. An air bladder for a safety tire as claimed in any of claims 1 to 7, wherein the resin film layer is selected from thermoplastic polyurethane resin, thermoplastic polyolefin resin, polyethylene resin, polypropylene resin, polybutadiene resin, polyvinylidene chloride resin and combinations thereof.

9. An air bladder for a safety tire as claimed in any of claims 1 to 8, wherein a radial expansion suppressing layer (2) for suppressing a radial change under the normal internal pressure state is arranged on the radially outer surface of the hollow toric body.

10. A safety tire (21) accommodating the air bladder (10) for a safety tire according to any of claims 1 to 9.

## Patentansprüche

1. Luftblase (10) für einen Sicherheitsreifen, die in einem Reifen (21) aufgenommen und mit Luft mit einem bestimmten Innendruck gefüllt werden soll, um einen Hohlraum mindestens zwischen der Blase und einer Innenfläche eines Laufflächenabschnittes des Reifens unter dem normalen Innendruckzustand des Reifens zu bilden, und um sich mit einer Abnahme des Innendruckes des Reifens radial auszudehnen, um die Lastaufnahme vom Reifen zu übernehmen,
wobei die Luftblase (10) aufweist: einen hohlen, wulstförmigen Körper, der eine durch den Innendruck hervorgerufene Spannung aufweist; und eine luftundurchlässige Schicht (5), die auf den Innenflächen des hohlen, wulstförmigen Körpers angeordnet ist, um den Innendruck der Luftblase aufrechtzuerhalten, wobei mindestens ein Teil der Innenflächen mit einer luftundurchlässigen Harzfilmschicht (6) ausgebildet ist, um zu verhindern, dass die Innenflächen aneinanderhaften, **dadurch gekennzeichnet, dass**
die luftundurchlässige Schicht (5) durch Bedecken der gesamten Innenflächen des hohlen, wulstförmigen Körpers mit der Harzfilmschicht (6) ausgebildet wird, und wobei die Harzfilmschicht am hohlen, wulstförmigen Körper durch Schmelzen zum Haften gebracht wird.

2. Luftblase für einen Sicherheitsreifen nach Anspruch 1, bei der die luftundurchlässige Schicht (5) eine Innenauskleidungsschicht aus luftundurchlässigem Gummi ist.

3. Luftblase für einen Sicherheitsreifen nach Anspruch 2, bei der angenommen wird, dass sich A auf die gesamte Länge der Innenfläche im Abschnitt des hohlen, wulstförmigen Körpers in der Breitenrichtung bezieht, dass sich B auf eine sich erstreckende Länge der Innenauskleidungsschicht entlang der Innenfläche bezieht, und dass sich C auf eine sich erstreckende Länge der Harzfilmschicht entlang der Innenfläche bezieht, wobei die Länge B größer ist als die Länge A, wobei die Länge C innerhalb eines Bereiches von 0,5A bis (2A-B) liegt, und wobei die Harzfilmschicht außerhalb des Bereiches angeordnet ist, wo die Innenauskleidungsschichten überlappst sind.

4. Luftblase für einen Sicherheitsreifen nach Anspruch 2 oder 3, bei der eine Luftdurchlässigkeit der Innenauskleidungsschicht bei 60 Grad C innerhalb eines Bereiches von 3,75 x 10⁻⁸ cm³*cm/(cm²*s*Pa) bis 2,25 x 10⁻⁶ cm³*cm/(cm²*s*Pa) liegt, und bei der die Dicke der Innenauskleidungsschicht innerhalb eines Bereiches von 0,3 mm bis 5,0 mm liegt.

5. Luftblase für einen Sicherheitsreifen nach einem der Ansprüche 1 bis 4, bei der eine Luftdurchlässigkeit der Harzfilmschicht bei 60 Grad C innerhalb eines Bereiches von 7,5 x 10⁻¹⁸ cm³*cm/(cm²*s*Pa) bis 15 x 10⁻¹⁶ cm³*cm/(cm²*s*Pa) liegt, und bei der die Dicke der Harzfilm schicht innerhalb eines Bereiches von 10 µm bis 4,0 mm liegt.

6. Luftblase für einen Sicherheitsreifen nach einem der Ansprüche 1 bis 4, bei der ein Passstück (8) für das Befestigen eines Ventils (9) für das Füllen eines Innendruckes auf der Innenfläche des Harzfilmes befestigt ist.

7. Luftblase für einen Sicherheitsreifen nach einem der Ansprüche 1 bis 6, bei der ein Passstück (8) für das Befestigen eines Ventils (9) für das Füllen eines Innendruckes auf der Innenfläche des Harzfilmes befestigt ist, und wobei die Harzfilmschicht angeordnet ist, ausgenommen bei einem Bereich für das Anbringen des Passstückes, in dem das Passstück befestigt werden soll.

8. Luftblase für einen Sicherheitsreifen nach einem der Ansprüche 1 bis 7, bei der die Harzfilmschicht ausgewählt wird unter: thermoplastischem Polyurethanharz; thermoplastischem Polyolefinharz; Polyethylenharz; Polypropylenharz; Polybutadienharz; Polyvinylidenchloridharz; und deren Kombinationen.

9. Luftblase für einen Sicherheitsreifen nach einem der Ansprüche 1 bis 8, bei der eine eine radiale Expansion unterdrückende Schicht (2) für das Unterdrücken einer radialen Veränderung unter dem normalen Innendruckzustand auf der radial äußeren Fläche des hohlen, wulstförmigen Körpers angeordnet ist.

10. Sicherheitsreifen (21), der die Luftblase (10) für einen Sicherheitsreifen nach einem der Ansprüche 1 bis 9 aufnimmt.

## Revendications

1. Vessie d'air (10) pour un bandage pneumatique de sécurité, devant être agencée dans un bandage pneumatique (21) et remplie d'air en présence d'une pression interne définie, pour former une cavité, au moins entre la vessie et une surface interne d'une partie de bande de roulement du bandage pneumatique, dans un état de pression interne normale du bandage pneumatique, et pour entraîner une dilatation radiale en cas d'une réduction de la pression interne du bandage pneumatique, pour assurer le support de la charge du bandage pneumatique ;
ladite vessie d'air (10) comprenant un corps torique creux supportant une tension entraînée par la pression interne, et une couche imperméable à l'air (5) agencée sur des surfaces internes du corps torique creux, pour maintenir la pression interne de la vessie d'air, au moins une partie des surfaces internes comportant une couche d'un film de résine imperméable à l'air (6) pour empêcher un collage des surfaces internes les unes sur les autres ; **caractérisée en ce que**
la couche imperméable à l'air (5) est configurée en recouvrant l'ensemble des surfaces internes du corps torique creux de la couche du film de résine (6), la couche du film de résine étant adhérée par fusion au corps torique creux.

2. Vessie d'air pour un bandage pneumatique de sécurité selon la revendication 1, dans laquelle la couche imperméable à l'air (5) est constituée par une couche de revêtement interne de caoutchouc imperméable à l'air.

3. Vessie d'air pour un bandage pneumatique de sécurité selon la revendication 2, dans laquelle, en supposant que A désigne la longueur totale de la surface interne dans la section de la largeur du corps torique creux, B désignant une longueur d'extension de la couche de revêtement interne le long de la surface interne, et C désignant une longueur d'extension de la couche du film de résine le long de la surface interne, la longueur B est supérieure à la longueur A, la longueur C étant comprise dans un intervalle allant de 0,5A à (2A-B) et la couche du film de résine étant disposée à l'extérieur de la région dans laquelle les couches de revêtement internes se chevauchent.

4. Vessie d'air pour un bandage pneumatique de sécurité selon les revendications 2 ou 3, dans laquelle une perméabilité à l'air de la couche de revêtement interne, en présence d'une température de 60 degrés C, est comprise dans un intervalle allant de 3,75 x 10⁻⁸ cm³*cm/(cm²*s*Pa) à 2,25 x 10⁻⁶ cm³*cm/(cm²*s*Pa), l'épaisseur de la couche de revêtement interne étant comprise dans un intervalle allant de 0,3 mm à 5,0 mm.

5. Vessie d'air pour un bandage pneumatique de sécurité selon l'une quelconque des revendications 1 à 4, dans laquelle une perméabilité à l'air de la couche du film de résine, en présence d'une température de 60 degrés C, est comprise dans un intervalle allant de 7,5 x 10⁻¹⁸ cm³*cm/(cm²*s*Pa) à 15 x 10⁻¹⁶ cm³*cm/(cm²*s*Pa), l'épaisseur de la couche du film de résine étant comprise dans un intervalle allant de 10 µm 4,0 mm.

6. Vessie d'air pour un bandage pneumatique de sécurité selon l'une quelconque des revendications 1 à 4, dans laquelle un raccord (8) pour fixer une soupape (9) destinée à remplir une pression interne, est fixé sur la surface interne du film de résine.

7. Vessie d'air pour un bandage pneumatique de sécurité selon l'une quelconque des revendications 1 à 6, dans laquelle un raccord (8) pour fixer une soupape (9) destinée à remplir une pression interne, est fixé sur la surface interne du film de résine, la couche du film de résine étant agencée sur toute la région, à l'exception d'une région d'application d'un raccord, sur laquelle le raccord doit être fixé.

8. Vessie d'air pour un bandage pneumatique de sécurité selon l'une quelconque des revendications 1 à 7, dans laquelle la couche du film de résine est sélectionnée dans le groupe constitué d'une résine de polyuréthane thermoplastique, d'une résine de polyoléfine thermoplastique, d'une résine de polyéthylène, d'une résine de polypropylène, d'une résine de polybutadiène, d'une résine de chlorure de polyvinylidène et de combinaisons correspondantes.

9. Vessie d'air pour un bandage pneumatique de sécurité selon l'une quelconque des revendications 1 à 8, dans laquelle une couche de suppression d'une dilatation radiale (2), destinée à supprimer un changement radial dans un état de pression interne normale, est agencée sur la surface radialement externe du corps torique creux.

10. Bandage pneumatique de sécurité (21) comprenant la vessie d'air (10) pour un bandage pneumatique de sécurité selon l'une quelconque des revendications 1 à 9.
